# EUROPÄISCHE PATENTSCHRIFT

(11) **EP 3 376 330 B1**
(45) Veröffentlichungstag und Bekanntmachung des Hinweises auf die Patenterteilung: **04.11.2020**
(21) Anmeldenummer: 17161534.7
(22) Anmeldetag: 17.03.2017
(51) Int. Cl.: B60W 50/14, G05D 1/00

(54) **FEHLERTOLERANTES VERFAHREN ZUR ERKENNUNG VON FEHLERN IN EINEM ELEKTRONISCHEN SYSTEM ZUR STEUERUNG EINES KONTROLLIERTEN OBJEKTES**
FAULT-TOLERANT METHOD FOR DETECTING FAULTS IN AN ELECTRONIC SYSTEM FOR CONTROLLING A CONTROLLED OBJECT
PROCÉDÉ TOLÉRANT AUX PANNES DESTINÉ À DÉTECTER DES PANNES DANS UN SYSTÈME ÉLECTRONIQUE POUR LA COMMANDE D'UN OBJET CONTRÔLÉ

(43) Veröffentlichungstag der Anmeldung: 19.09.2018
(73) Patentinhaber: TTTech Auto AG, 1040 Wien (AT)
(72) Erfinder: KOPETZ, Hermann, 2500 Baden (AT); POLEDNA, Stefan, 3400 Klosterneuburg (AT); NIEDRIST, Georg, 2353 Guntramsdorf (AT); SCHMIDT, Eric, 2143 Großkrut (AT); HELPA, Christopher, 1180 Wien (AT)
(74) Vertreter: Patentanwaltskanzlei Matschnig & Forsthuber OG

(56) Entgegenhaltungen:
- EP-A2- 2 881 829
- WO-A1-2013/123543
- US-A1- 2008 097 699

## Beschreibung

Die Erfindung betrifft ein Verfahren zur Steuerung eines kontrollierten Objektes, beispielsweise eines Fahrzeugs, das in einer sich verändernden Umgebung eingebettet ist, wobei ein die Steuerung durchführendes elektronisches System Sensoren, insbesondere eine Vielzahl von Sensoren, Aktuatoren, insbesondere eine Vielzahl von Aktuatoren, und Knotenrechner, insbesondere eine Vielzahl von Knotenrechnern, umfasst, welche über ein Echtzeitkommunikationssystem Daten austauschen.

Weiters betrifft die Erfindung ein elektronisches System, z.B. ein Computersystem, zur Steuerung eines kontrollierten Objektes, beispielsweise eines Fahrzeugs, das in einer sich verändernden Umgebung eingebettet ist, wobei das elektronische System Sensoren, insbesondere eine Vielzahl von Sensoren, Aktuatoren, insbesondere eine Vielzahl von Aktuatoren, und Knotenrechner, insbesondere eine Vielzahl von Knotenrechnern, umfasst, welche über ein Echtzeitkommunikationssystem Daten austauschen.

Schließlich betrifft die Erfindung ein kontrolliertes Objekt mit einem solchen elektronischen System.

Verfahren zur Steuerung von Fahrzeugen sind in der US 2008/0097699 A1 und der EP 2 881 829 A2 beschrieben. Die WO 2013/123543 A1 beschreibt ein Computersystem.

Die vorliegende Erfindung liegt im Bereich der Computertechnik. Sie betrifft ein Verfahren und ein elektronisches System zur fehlertoleranten Steuerung eines kontrollierten Objektes, insbesondere eines autonomen kontrollierten Objektes, insbesondere eines Fahrzeugs.

Die Entwicklungen der Sensortechnik und der Computertechnik ermöglichen die weitgehend autonome Steuerung von technischen Anlage und Objekten, wie z.B. Fahrzeugen, welche autonom ein Ziel ansteuern.

Laut Wikipedia, siehe zitierte Literatur [4], wird die Klassifizierung des autonomen Fahrens in sechs Stufen vorgenommen:
**Level 0:** "Driver only", der Fahrer fährt selbst, lenkt, gibt Gas, bremst etc.
**Level 1:** Bestimmte Assistenzsystem helfen bei der Fahrzeugbedienung (u.a. ACC).
**Level 2**: Teilautomatisierung. U.a. automatisches Einparken, Spurhaltefunktion, allgemeine Längsführung, Beschleunigen, Abbremsen etc. werden von den Assistenzsystemen übernommen (u.a. Stauassistent).
**Level 3:** Hochautomatisierung. Der Fahrer muss das System nicht dauernd überwachen. Das Fahrzeug führt selbstständig Funktionen wie das Auslösen des Blinkers, Spurwechsel und Spurhalten durch. Der Fahrer kann sich anderen Dingen zuwenden, wird aber bei Bedarf innerhalb einer Vorwarnzeit vom System aufgefordert die Führung zu übernehmen. Diese Form der Autonomie ist auf Autobahnen technisch machbar. Der Gesetzgeber arbeitet darauf hin, Level 3-Fahrzeuge zuzulassen. Man spricht von einem Zeitrahmen bis 2020.
**Level 4:** Vollautomatisierung. Die Führung des Fahrzeugs wird dauerhaft vom System übernommen. Werden die Fahraufgaben vom System nicht mehr bewältigt, kann der Fahrer aufgefordert werden, die Führung zu übernehmen.
**Level 5:** Die völlige Autonomie des Fahrzeugs. Das Fahrzeug ist ohne Lenkrad ausgestattet, das Fahrzeug kann sich fahrerlos bewegen.

In am Markt erhältlichen Fahrzeugen wird gegenwärtig der Level 2 realisiert. Bei Level 2 ist der Fahrer verpflichtet, die ordnungsgemäße Funktion des Computersystems kontinuierlich zu überwachen und im Fehlerfall sofort einzugreifen. Bei den höheren Automatisierungsstufen muss das Computersystem fehlertolerant ausgeführt sein, um die Sicherheit des Fahrzeugs auch bei einem Fehler im Computersystem zu gewährleisten.

In der ISO 26262 Norm wird ein elektronisches System (Hardware plus Software) in einem Fahrzeug einer von vier Integritätsstufen (Stufe ASIL A bis ASIL D) zugeordnet, wobei die Stufe ASIL D die höchste Integritätsstufe darstellt [5]. Die Integrität von elektronischen Systemen zur vollautomatisierten Fahrzeugsteuerung (Level 4 und Level 5) muss ASIL D entsprechen. Während bei ASIL B die Wahrscheinlichkeit für das Auftreten eines gefährlichen Fehlers, der schwerwiegende Folgen für die Sicherheit eines Fahrzeugs hat, kleiner sein muss als 10⁻⁶ pro Stunde (d.s.103 FIT), muss diese Wahrscheinlichkeit bei ASIL D kleiner sein als 10⁻⁸ pro Stunde (d.s. 10 FIT).

Die Ursache für das Auftreten eines Ausfalls eines elektronisches System kann ein Alterungsfehler (physical fault) der Hardware oder ein Entwurfsfehler (design fault) in der Hardware oder Software sein.

Ein Alterungsfehler liegt vor, wenn eine Baueinheit, die zu Beginn ihrer Lebenszeit voll funktionstüchtig, war auf Grund von Alterungsprozessen der Hardware ausfällt. Bei state of the art automotive chips ist die permanente Fehlerrate für Alterungsfehler <100 FIT. Durch den Einsatz von aktiver Redundanz (TMR oder self-checking components) kann die geforderte Fehlerrate von ASIL D (kleiner als 10) FIT in der Hardware erreicht werden.

Entwurfsfehler können in der Hardware oder in der Software enthalten sein. Die Folgen von Hardware Entwurfsfehler können durch aktive Redundanz von diversitärer Hardware beherrscht werden.

Maßnahmen, die zu einer Reduktion der Wahrscheinlichkeit für das Vorhandensein eines unentdeckten Entwurfsfehlers in der Software führen, sind ein systematischer Entwurfsprozess, Verifikation und Validierung, vor allem durch umfangreiches Testen.

Eine wesentliche Ursache für das Auftreten von Entwurfsfehlern in der Software liegt in der Komplexität der Software. Entsprechend dem State-of-the-Art ist es möglich, ein komplexes Softwaresystem so gründlich zu validieren, dass die geforderte Fehlerrate von ASIL B, nicht jedoch von ASIL D, erreicht werden kann.

Es entspricht dem Stand der Technik, dass *Kontrollsysteme* (das sind Systeme zur Echtzeit-Steuerung und/oder Regelung eines kontrollierten Objektes), wie z.B. ein gegenständliches elektronisches System, periodisch ablaufen [8, p.7]. Das kontrollierte Objekt wird zu periodischen Beobachtungszeitpunkten (*sampling points*) beobachtet. Die dabei erfassten Daten bilden die Grundlage für die, vorzugsweise schnellst-mögliche, Berechnung von (neuen) Sollwerten für Aktuatoren, die das Verhalten des kontrollierten Objektes beeinflussen.

Wir bezeichnen die sich periodisch wiederholende Ausführung einer Aufeinanderfolge von, möglicherweise verteilten, Berechnungen, die nach jeder Beobachtung durchgeführt werden, als *Frame.*

Die Folge von Softwareprozessen, die innerhalb eines Frames abgearbeitet werden müssen, ist in einem oder mehreren *Datenflusspfaden* (DFP) festgelegt.

Mit jedem Frame sind zwei Zeitparameter verbunden:
Die *Ausführungsdauer* gibt das Zeitintervall zwischen dem sampling point und dem Zeitpunkt der Ausgabe der Ergebnisse des Frames an die Aktuatoren des zu kontrollierenden Objekts an. Je kürzer die Ausführungsdauer eines Frames ist, desto besser ist die Güte eines Kontrollsystems.

Das *Frame-Intervall (samling time)* gibt den zeitlichen Abstand zwischen zwei aufeinanderfolgenden sampling points an.

Es ist eine Aufgabe der Erfindung, die Zuverlässigkeit der Steuerung eines kontrollierten Objektes zu erhöhen.

Diese Aufgabe wird mit einem eingangs erwähnten Verfahren und einem eingangs erwähnten elektronischen System, z.B. einem Computersystem, dadurch gelöst, dass das kontrollierte Objekt und dessen Umgebung mit Sensoren periodisch beobachtet werden, und in jedem Frame basierend auf den durch die Beobachtung des kontrollierten Objektes und dessen Umgebung erfassten Daten mindestens drei unabhängige Datenflusspfade, DFP, ausgeführt werden, wobei beispielsweise für jeden DFP die Beobachtung mittels unterschiedlicher Sensoren erfolgt, und wobei
- ein erster DFP aus den durch die Beobachtung des kontrollierten Objektes und dessen Umgebung erfassten Daten mittels komplexer Software ein Modell des kontrollierten Objektes und der Umgebung des kontrollierten Objektes ermittelt und auf Basis dieses Modells eine Trajektorien-Planung durchführt, um eine oder mehrere mögliche Trajektorien, die unter den gegebenen Umweltbedingungen einer vorgegeben Aufgabenstellung entsprechen, zu erstellen, und wobei
- ein zweiter DFP aus den durch die Beobachtung des kontrollierten Objektes und dessen Umgebung erfassten Daten mittels, vorzugsweise diversitärer, komplexer Software ein Modell des kontrollierten Objektes und der Umgebung des kontrollierten Objektes ermittelt und auf Basis dieses Modells ein *sicheres Raum-Zeit Domain,* SRZD, festlegt, innerhalb welchem SRZD alle sicheren Trajektorien liegen müssen, und wobei
- ein dritter DFP aus durch die Beobachtung des kontrollierten Objektes und dessen Umgebung erfassten Daten ein Modell des kontrollierten Objektes und der Umgebung des kontrollierten Objektes ermittelt und auf Basis dieses Modells eine Notlauftrajektorie errechnet,
und wobei im Normalbetrieb eine Entscheidungsinstanz überprüft, ob die Notlauftrajektorie innerhalb des sicheren Raum-Zeit Domain (SRZD) liegt.

Die vorliegende Erfindung legt ein Verfahren und eine Hardware-Architektur zur Erhöhung der Zuverlässigkeit eines komplexen elektronischen Systems offen. Durch den gezielten Einsatz von Hardware- und Softwareredundanz wird die Zuverlässigkeit des elektronischen Systems signifikant erhöht. Durch den gezielten Einsatz von Hardware-und Softwareredundanz wird der latente Ausfall des Notlaufsystems sofort erkannt.

Beispielsweise kann jeder DFP die Beobachtungen aller Sensoren verwenden. Es kann aber auch vorgesehen sein, dass jeder DFP nur die Beobachtungen bestimmter Sensoren verwendet, und beispielsweise kann auch vorgesehen sein, dass jeder DFP nur speziell ihm zugeordnete Sensoren, d.h. deren Beobachtungen verwendet.

Die Sensoren sind vorzugsweise synchronisiert, d.h. alle Sensoren führen ihre Beobachtungen gleichzeitig (periodisch) durch.

Vorzugsweise werden die DFPs in einem Frame jeweils gleichzeitig ausgeführt. Dies bedeutet, dass einerseits Beobachtungen der Sensoren gleichzeitig stattfinden (siehe oben), sodass dass die DFPs zur gleichen Zeit starten, und dass weiters die Ergebnisse der DFPs der Entscheidungsinstanz zum gleichen Zeitpunkt übergeben werden.

Im Bereich der Sicherheitstechnik in der Luft und Raumfahrt wird zwischen einfacher und komplexer Software unterschieden [6]. Wenn die Software, die zum Einsatz kommt, einfach ist und formal überprüft und/oder umfassend getestet werden kann, so wird angenommen, dass die geforderte Fehlerrate von ASIL D durch einen sorgfältigen Entwicklungsprozess erreicht werden kann.

Wenn die Software, die zum Einsatz kommt, komplex ist, so wird angenommen, dass die Wahrscheinlichkeit für das Auftreten von Entwurfsfehlern ASIL B entspricht. Durch Softwareredundanz, d.h. die parallele Ausführung von zwei oder mehr diversitären ASIL B Software-Systemen mit einer anschließenden anwendungsspezifischen Gegenüberstellung der Ergebnisse kann die Zuverlässigkeit der Software signifikant erhöht werden. Ein Verfahren zur Erhöhung der Softwarezuverlässigkeit durch aktive Redundanz (mittels diversitärer Software ist in [7] beschrieben. Dieses Verfahren ist jedoch nicht einsetzbar, wenn sich die diversitären Software-Versionen nicht replika deterministisch verhalten.

Diversitäre Software ist nicht replika deterministisch, wenn in der Software ein Non-Deterministic Design Construct (NDDC) [8, p.128] vorhanden ist. Ein NDDC entscheidet zwischen zwei richtigen aber nicht kompatiblen Szenarien. Im Allgemeinen darf nicht angenommen werden, dass zwei diversitäre Versionen der Software mit NDDCs zu vergleichbaren Ergebnissen kommen.

Wenn z.B. auf einer Straße ein Felsbrocken liegt und die Entscheidung zu treffen ist, ob dieser Felsbrocken von einem Fahrzeug links oder rechts umfahren werden soll, so kann im Allgemeinen nicht angenommen werden, dass zwei diversitäre Software Versionen zu dem gleichen Ergebnis kommen. Obwohl beide Ergebnisse richtig sind, sind sie nicht replika deterministisch. Dadurch geht die Fehlertoleranz verloren.

Die autonome Führung eines Kraftfahrzeugs erfordert ein Softwaresystem zur Bilderkennung, Umweltmodellbildung und Trajektorienplanung. Dieses Softwaresystem ist nicht einfach, sondern komplex und beinhaltet üblicherweise NDDCs.

Es wird vorzugsweise vorgeschlagen, das gesamte Softwaresystem in zwei Teile zu unterteilen. Der eine Teil enthält die komplexe Software. Der zweite Teil enthält eine einfache Software, vorzugsweise mit NDDCSs.

Die Zuverlässigkeit der komplexen Software wird durch die funktionelle Redundanz von zwei oder mehr diversen Versionen der komplexen Software, die auf unabhängigen Fault-Containment Units (FCUs) ausgeführt werden, signifikant erhöht. Die Zuverlässigkeit der einfachen Software wird durch erschöpfendes Testen und formale Analysen erreicht.

Um eine weitgehende Software-Diversität der komplexen Software zu erwirken, errechnet eine Softwareversion eine oder mehrere passende Trajektorien im Raum-Zeit Kontinuum, während eine anderer unabhängige Softwareversion ein Gebilde im Raum-Zeit Kontinuum bestimmt, in dem jede sichere Trajektorie liegen muss. Eine dritte unabhängige Softwareversion bestimmt eine Notlauftrajektorie, die das Fahrzeug in einen sicheren Zustand führt.

Eine Entscheidungsinstanz, die in einfacher Software ohne Softwareredundanz realisiert wird und vorzugsweise NDDCs enthält, überprüft die von der komplexen Software bereitgestellten alternativen Ergebnisse und entscheidet, welche Alternative ausgewählt wird. Diese einfache Software wird auf vorzugsweise einer fehlertoleranten Hardware ausgeführt, um auftretende Hardwarefehler zu maskieren.

Die vorliegende Erfindung beschreibt ein innovatives Verfahren, wie ein komplexes elektronisches System zur Steuerung eines, insbesondere sicherheitskritischen, kontrollierten Objektes, z.B. die Steuerung eines autonomen Fahrzeugs, realisiert werden kann. Es wird zwischen einfacher und komplexer Software unterschieden, wobei die einfache Software vorzugsweise auf einer fehlertoleranten Hardware ausgeführt wird, und wobei beispielsweise mehrere diversitäre Versionen einer komplexen Software gleichzeitig auf unabhängigen Fault-Containment Units (FCU) ausgeführt werden, und wo aus den Ergebnissen der komplexen Software von einer Entscheidungsinstanz, die mittels einer einfachen Software realisiert ist, ein Ergebnis ausgewählt wird, das an die Aktuatoren weiterzuleiten ist.

Vorteilhafte Ausgestaltungen des erfindungsgemäßen Verfahrens bzw. Systems sind im Folgenden beschrieben:
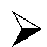 Die Berechnungen der Entscheidungsinstanz können auf einer TMR Hardware ausgeführt werden.
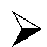 Die Berechnungen der Entscheidungsinstanz können gleichzeitig auf zwei unabhängigen self-checking Hardwarebaueinheiten ausgeführt werden.
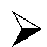 Die Ergebnisse des ersten und des zweiten DFPs werden einer Entscheidungsinstanz übergeben, wobei die Entscheidungsinstanz mittels einer *einfachen Software* realisiert ist, und wobei die Entscheidungsinstanz überprüft, ob mindestens eine der vom ersten DFP ermittelten Trajektorien *sicher* ist, d.h. innerhalb des SRZD liegt, das von dem zweiten DFP ermittelt wurde, und wobei im Falle, dass dies zutrifft, eine vom ersten DFP ermittelte sichere Trajektorie ausgewählt wird, und wobei die Entscheidungsinstanz die der ausgewählten Trajektorie entsprechenden Sollwerte an eine Aktuatorsteuerung übergibt, und wobei im Falle, dass dies nicht zutrifft, auf die Ergebnisse mindestens eines folgenden Frames gewartet wird, und wobei im Falle, dass auch im nächsten oder übernächsten Frame keine sichere Trajektorie vorhanden, ist von der Entscheidungsinstanz auf eine Notlauftrajektorie umgeschaltet wird. Wird also in einem Frame festgestellt, dass keine der von dem ersten DFP in diesem Frame ermittelten Trajektorien sicher ist, d.h. keine der Trajektorien innerhalb der von dem zweiten DFP in diesem Frame ermittelten SRZD liegt, so wird wie oben beschrieben auf das Ergebnis in mindestens einem auf den betrachteten Frame folgenden Frame gewartet, und wenn auch im (bezüglich des betrachteten Frames) nächsten oder übernächsten Frame keine sichere Trajektorie vorhanden, wird von der Entscheidungsinstanz auf eine Notlauftrajektorie umgeschaltet.
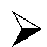 Die Entscheidungsinstanz kann im Falle, dass die Notlauftrajektorie nicht vorhanden oder nicht sicher ist, d.h. nicht innerhalb des SRZD liegt, eine Alarmmeldung abgeben, beispielsweise eine Alarmmeldung an einen Benutzer des kontrollierten Objektes, z.B. den Fahrer eines Fahrzeuges, übermittelt.

Im Folgenden ist die Erfindung an Hand eines in der Zeichnungen gezeigten Ausführungsbeispiels beschrieben. In den Zeichnungen zeigt
Fig. 1 ein Datenflussdiagramm eines komplexen elektronischen Systems zur Steuerung eines kontrollierten Objektes in Form eines Fahrzeugs,
Fig. 2 eine mögliche Hardwarearchitektur zur Realisierung des komplexen elektronischen Systems der Figur 1 mit einer TMR Hardware zur Ausführung eines NDDC, und
Fig. 3 zeigt eine mögliche Hardwarearchitektur zur Realisierung des komplexen elektronischen Systems der Figur 1 mit einer self-checking Hardware zur Ausführung eines NDDC.

Die folgende konkrete Beschreibung einer Realisierung behandelt eine der vielen möglichen Realisierungen des neuen Verfahrens am Beispiel eines autonomen Fahrzeugsteuerungssystems. Die Beschreibung verwendet Begriffe, die im Folgenden genau beschrieben sind. Diese Begriffe gelten nicht nur im Rahmen der Figurenbeschreibung, sondern im Zusammenhang der gesamten Offenbarung.

Ein *kontrolliertes Objekt* ("controlled object", abgekürzt CO) ist eine technische Anlage, die von einem elektronischen System, z.B. einem Computersystem, und/oder einem Menschen gesteuert wird, mit dem Ziel, im Laufe der Zeit eine vorgegebene Aufgabenstellung unter den gegebenen Umgebungsbedingungen zu erfüllen. Beispiele für COs sind: ein Fahrzeug, ein Flugzeug, eine Landmaschine, ein Roboter, oder eine Drohne.

Eine Aufgabenstellung für eine Drohne könnte beispielsweise darin bestehen, ein bestimmtes Ziel anzufliegen, unter Berücksichtigung eines gesperrten Teils des Luftraumes, oder unter Erreichung einer gewissen Mindestflughöhe, etc.

Ein *Umgebungsmodell* ist eine digitale Datenstruktur, die zu einem gegebenen Zeitpunkt ein Abbild der für die vorgegebene Aufgabe wesentlichen Charakteristika der Umgebung, insbesondere der Umgebung eines CO, darstellt. Ein Beispiel für ein Umgebungsmodell ist die Beschreibung einer Straße und der zum gewählten Zeitpunkt auf der Straße befindlichen statischen und dynamischen Objekte.

Eine *Trajektorie* ist ein Pfad im Raum-Zeit-Kontinuum, den ein CO im Laufe der Zeit ausführen kann, um eine vorgegebene Aufgabe zu erfüllen. Die Charakteristika der Trajektorien eines CO hängen von der Konstruktion des CO, der vorgegebenen Aufgabenstellung und den aktuellen Umgebungsbedingungen ab. Zum Beispiel bezeichnet man einen möglichen Weg, den ein Fahrzeug unter den gegebenen Umgebungsbedingungen ausführen bzw. zurücklegen kann, um sein Ziel zu erreichen als Trajektorie. Ein Charakteristikum einer Trajektorie bzw. der Trajektorien kann beispielsweise die Geschwindigkeit sein, mit welcher die Trajektorie durchfahren wird.

Unter einem *Softwareprozess* wird die Ausführung eines Programmsystems auf einem oder mehreren Computern verstanden.

Eine *Fault Containment Unit* (FCU) ist eine Baueinheit, die die unmittelbaren Folgen einer Fehlerursache abkapselt (siehe zitierte Literatur [6], Seite 155).

Unter dem Begriff *fehlertolerante Hardware* wird eine Hardwarearchitektur verstanden, die auftretende Hardwarefehler entsprechend der vorliegenden Fehlerhypothese maskiert. Beispiele für solche Hardwarearchitekturen sind Triple- Modulare Redundanz (TMR) oder die parallele Ausführung der Software auf self- checking Baueinheiten, wie in der zitierten Literatur [6], Seite 156, beschrieben. Es entspricht dem State-of-the- art, dass die redundanten FCUs über mindestens zwei unabhängige Kommunikationskanäle ihre Eingangsdaten empfangen und über mindestens zwei unabhängige Kommunikationskanäle ihre Ausgabedaten weitergeben.

Ein Datenflusspfad (DFP) ist eine Aufeinanderfolge von verteilten Softwareprozessen, wobei der erste Softwareprozess Eingabedaten liest und die Ausgabedaten eines vorgelagerten Softwareprozesses die Eingabedaten für den folgenden Softwareprozess darstellen. Die Ausgabedaten des letzten Softwareprozesses sind die Ergebnisdaten des DFP. In vielen Anwendungsfällen der Echtzeitdatenverarbeitung übernimmt der erste Softwareprozess eines DFP die Sensordaten und produziert der letzte Softwareprozess eines DFP die Sollwerte für die Aktuatoren.

In den meisten Anwendungsfällen der Echtzeitdatenverarbeitung wird ein DFP zyklisch durchlaufen. Den zeitlichen Abstand zwischen zwei Zyklen bezeichnet man als Frame. Zwischen zwei aufeinanderfolgenden Frames eines DFP kann ein innerer Zustand (siehe zitierte Literatur 8, Seite 84) eines Softwareprozesses gespeichert werden.

Zwei DFPs sind diversitär, wenn sie die gleiche Zielsetzung verfolgen, aber die Softwareprozesse der DFPs unterschiedliche Algorithmen (Algorithmen-Diversität) und/oder unterschiedliche Eingabedaten (Daten-Diversität) verwenden.

Eine *Umgebungsmodellbildung* ist ein Softwareprozess, der ausgehend von den statischen Daten der Umgebung und den von diversen Sensoren erfassten dynamischen Daten der Umgebung ein Umgebungsmodell erstellt.

Eine *Trajektorienplanung* ist ein Softwareprozess, der auf der Basis eines gegebenen Umgebungsmodells und einer gegebenen Zielsetzung eine oder mehrere mögliche Trajektorien festlegt, die eine vorgegebene Aufgabe bzw. Aufgabenstellung lösen.

Die *unmittelbare Zukunft* eines Zeitpunkts ist jenes Zeitintervall, das mit dem Zeitpunkt beginnt und endet, sobald der Prozess (z.B. das Fahrzeug) in einem sicheren Zustand ist.

Wenn z.B. 10 Sekunden erforderlich sind, um ein Fahrzeug zum Stillstand (sicherer Zustand) zu bringen, und eine Abtastrate von 30 Frames pro Sekunde vorgesehen ist, so beinhaltet die unmittelbare Zukunft eine Folge von 300 zeitlich äquidistanten Zeitpunkten.

Eine *sichere Trajektorie* ist eine Trajektorie im Raum-Zeit-Kontinuum, die den Weg eines Prozesses (z.B. eines Fahrzeugs) in der unmittelbaren Zukunft beschreibt, wobei dieser Weg frei von Hindernissen ist und alle in der unmittelbaren Zukunft relevanten (z.B. fahrdynamischen) Grenzen beachtet.

Wenn z.B. die Fahrbahn nass ist, so sind die fahrdynamischen Grenzen anders zu setzen als wenn die Fahrbahn trocken ist.

Eine *Notlauftrajektorie* ist eine sichere Trajektorie, die den Prozess (z.B. das Fahrzeug) in einen sicheren Zustand führt.

Ein *sicheres Raum-Zeit Domain* (SRZD) ist ein schlauchförmiges Gebilde im Raum-Zeit-Kontinuum, in dem alle sicheren Trajektorien der unmittelbaren Zukunft enthalten sind.

Eine *Entscheidungsinstanz* ist ein anwendungsspezifischer Softwareprozess, der eine Anzahl von Vorschlägen als Eingabedaten erhält, diese Vorschläge analysiert und die Freiheit hat, eine Entscheidung, zu treffen welcher - möglicherweise abgeänderter - Vorschlag ausgewählt wird. In vielen Fällen enthält eine Entscheidungsinstanz NDDCs.

Der *Normalbetrieb* ist dadurch charakterisiert, dass eine von der Trajektorien-Planung errechnete Trajektorie im sicheren Raum-Zeit Domain (SRZD) liegt.

Zum Beispiel erhält eine Entscheidungsinstanz eine Anzahl von Vorschlägen möglicher Trajektorien eines Fahrzeugs als Eingabe und entscheidet sich für eine - möglicherweise abgeänderte - Trajektorie die zur Ausführung gebracht wird.

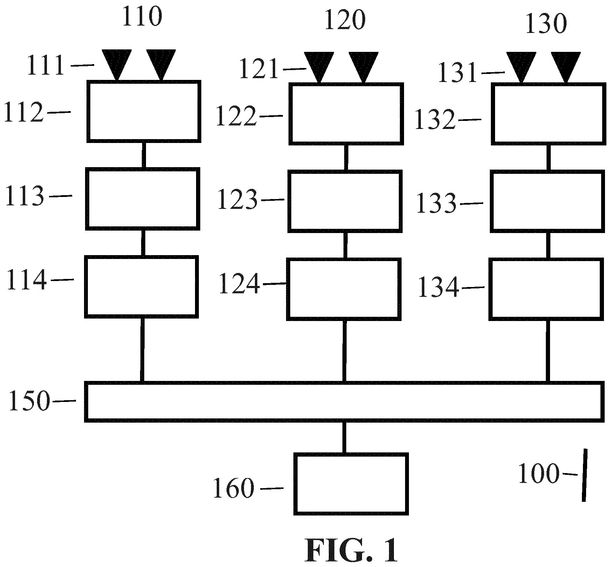

Fig. 1 zeigt ein Datenflussdiagramm eines komplexen elektronischen Systems zur autonomen Steuerung eines Fahrzeugs. Die senkrechten Verbindungslinien 100 der Kästchen von Fig. 1 zeigen den Datenfluss von oben nach unten.

In Fig. 1 sind drei diversitäre DFPs 110, 120 und 130 dargestellt. Jeder der DFPs verfügt über eigene Sensoren zur Beobachtung der Umwelt des Fahrzeugs. Die Sensoren werden zyklisch ausgelesen. Der erste DFP 110 hat die Sensoren 111, der zweite DFP 120 hat die Sensoren 121 und der dritte DFP 130 hat die Sensoren 131. Beispiele für Sensoren eines Fahrzeugs sind Kameras, Radarsensor, LIDAR Sensoren und Ultraschallsensoren. In der ersten Verarbeitungsstufe des DFP werden die rohen Sensordaten ausgelesen und vorverarbeitet. Das ist in DFP 110 der Softwareprozess 112, in DFP 120 der Softwareprozess 122 und in DFP 130 der Softwareprozess 132.

Es ist vorteilhaft, wenn die Softwareprozesse 112, 122 und 132 unterschiedliche Algorithmen (Algorithmen-Diversität) verwenden, die mit unterschiedlichen Eingabedaten versorgt werden (Daten-Diversität).

Es ist vorteilhaft, wenn die Sensoren 111, 121 und 131 die Umgebung gleichzeitig beobachten. Die gleichzeitige Beobachtung kann mit einem von einer fehlertoleranten globalen Zeit abgeleiteten verteilten Triggersignal erreicht werden.

In der zweiten Verarbeitungsstufe der DFPs wird auf der Basis der empfangene Sensordaten und Informationen über statische Parameter der Umgebung (z.B. aus vorliegendem Kartenmaterial eines Navigationssystems) eine Umgebungsmodellbildung vollzogen. Das ist in DFP 110 der Softwareprozess 113, in DFP 120 der Softwareprozess 123 und in DFP 130 der Softwareprozess 133.

Es ist vorteilhaft, wenn die Softwareprozesse 113, 123 und 133 unterschiedliche Algorithmen (Algorithmen-Diversität) verwenden, die mit unterschiedlichen Eingabedaten versorgt werden (Daten-Diversität).

In der dritten Verarbeitungsstufe des ersten DFP 110, d.i. der Softwareprozess 114, wird auf Basis der gebildeten Umgebungsmodelle der zweiten Verarbeitungsstufe 113 eine Trajektorienplanung vollzogen.

In der dritten Verarbeitungsstufe des zweiten DFP 120, d.i. der Softwareprozess 124, wird auf der Basis der gebildeten Umweltmodelle der zweiten Verarbeitungsstufe 123 ein sicheres Raum-Zeit Domain (SRZD), in dem alle sicheren Trajektorien liegen müssen, bestimmt.

In der dritten Verarbeitungsstufe des DFP 130, d.i. der Softwareprozess 134, wird auf der Basis der gebildeten Umweltmodelle der zweiten Verarbeitungsstufe 133 die Notlauftrajektorie errechnet, die das Fahrzeug innerhalb der unmittelbaren Zukunft in einen sicheren Zustand führen kann.

Die Trajektorienplanung 114 in der dritten Verarbeitungsstufe des ersten DFP 110 entwickelt eine oder mehrere alternative Trajektorien zur Zielerreichung, die einem folgenden Softwareprozess, einer Entscheidungsinstanz 150, angeboten werden. Die zum Vorschlag gebrachten Trajektorien können von der Trajektorienplanung 114 aus der Sicht der Sicherheit und der Effektivität in Bezug auf die Zielerreichung bzw. Aufgabenstellung bewertet werden.

Die Entscheidungsinstanz 150, die in einer einfachen Software realisiert ist, überprüft ob die ausgewählte Trajektorie der Trajektorienplanung 114 innerhalb des von dem Softwareprozess 124 des zweiten DFP 120 ermittelten sicheren Raum-Zeit Domain (SRZD) liegt. Wenn dies der Fall ist, werden die entsprechenden Sollwerte an die Aktuatoren übergeben.

Wenn keine der Trajektorie der Trajektorienplanung 114 innerhalb des von dem Softwareprozess 124 ermittelten SRZD liegt, dann gibt die Entscheidungsinstanz keine neuen Sollwerte an die Aktuatoren aus, sondern wartet auf das folgende Frame.

Wenn auch im folgenden Frame keine der Trajektorien der Trajektorienplanung 114 innerhalb des von dem Softwareprozess 124 ermittelten SRZD liegt, wählt die Entscheidungsinstanz die von dem Softwareprozess 134 angebotene Notlauftrajektorie aus und bringt das Fahrzeug in einen sicheren Zustand.

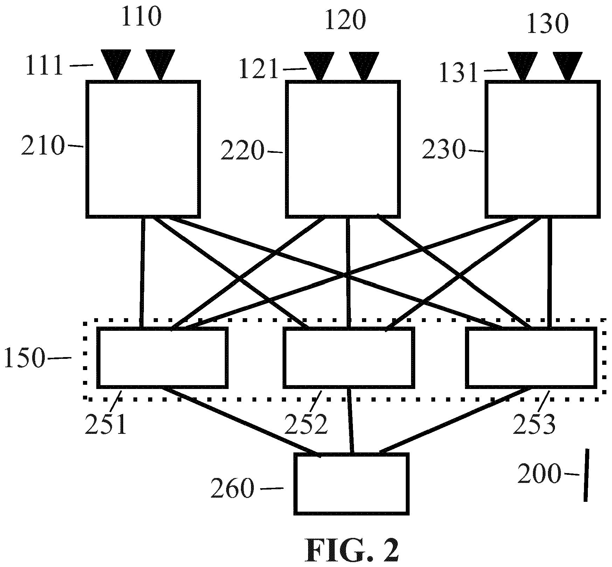

Fig. 2 zeigt eine mögliche Hardwarestruktur zur Ausführung der DFPs der Fig. 1. Die Kästchen der Fig. 2 stellen Baueinheiten dar. Die Verbindungslinien 200 der Baueinheiten von Fig. 2 zeigen die vorhanden Kommunikationskanäle zur Übertragung von Daten.

DFP 110 beinhaltet die Sensoren 111 und die Baueinheit 210. DFP 120 beinhaltet die Sensoren 121 und die Baueinheit 220. DFP 130 beinhaltet die Sensoren 131 und die Baueinheit 230. Die Baueinheit 210 bildet eine Fault-Containment Unit (FCU), die Hardwarekomponenten (Knotenrechner, Datenleitungen, Speicher) zur Ausführung der Softwareprozesse 112, 113 und 114 des DFP 110 enthält. Die Baueinheit 220 bildet eine Fault-Containment Unit (FCU), die Hardwarekomponenten (Knotenrechner, Datenleitungen, Speicher) zur Ausführung der Softwareprozesse 122, 123 und 124 des DFP 120 enthält. Die Baueinheit 230 bildet eine Fault-Containment Unit (FCU), die Hardwarekomponenten (Knotenrechner, Datenleitungen, Speicher) zur Ausführung der Softwareprozesse 132, 133 und 134 des DFP 130 enthält.

Die Entscheidungsinstanz 150 der Fig. 1 wird auf den drei Knotenrechnern 251, 252 und 253 gleichzeitig replika deterministisch ausgeführt, um Hardwarefehler maskieren zu können. Die Ergebnisse der drei Knotenrechnern 251, 252 und 253 werden einer, vorzugsweise intelligenten, Aktuatorsteuerung 260 übergeben, die eine bitweise zwei-aus-drei Votierung vornimmt.

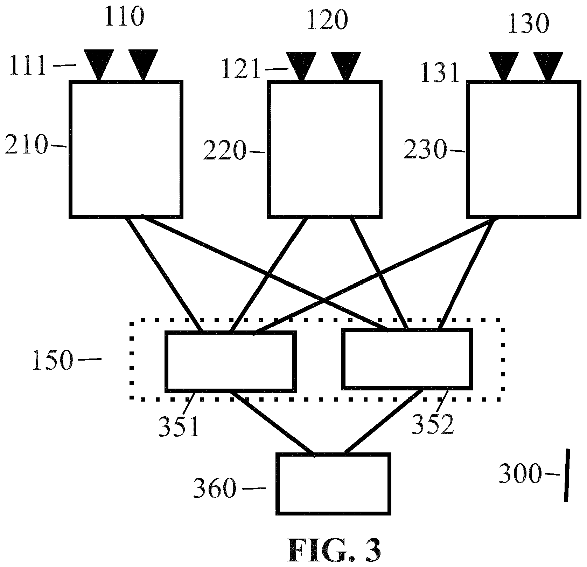

Fig. 3 zeigt eine andere Hardwarestruktur zur Ausführung der DFPs der Fig. 1. Die Kästchen der Fig. 2 stellen Baueinheiten dar. Gleiche Bezugszeichen in Fig. 3 und Fig. 2 bezeichnen dieselben Elemente.

Die Verbindungslinien 300 der Baueinheiten zeigen die vorhanden Kommunikationskanäle zur Übertragung von Daten. Im Unterschied zu Fig.2 wird in Fig. 3 die Entscheidungsinstanz 150 auf zwei self-checking Baueinheiten 351 und 352 ausgeführt. Eine, vorzugsweise intelligente, Aktuatorsteuerung 360 übernimmt eines der Resultate von 351 oder 352. Da die Softwareprozesse, die auf den Baueinheiten 351 und 352 ablaufen, replika-deterministisch sind und die Hardware der Baueinheiten 351 und 352 sich selbst überprüft, müssen die Resultate der Baueinheiten 351 und 352 identisch sein.

Im Normalbetrieb liegt, insbesondere in jedem Frame, mindestens eine von dem ersten DFP errechnete Trajektorie innerhalb des sicheren Raum-Zeit Domains (SRZD), das von dem zweiten DFP errechnet wurde. Um einen Ausfall oder einen Fehler in der dritten DFP, die die Notlauftrajektorien-Berechnung durchführt, erkennen zu können, ist vorzugsweise vorgesehen, dass im Normalbetrieb - insbesondere in jedem Frame - überprüft wird, ob die Notlauftrajektorie innerhalb des SRZD liegt. Wenn dies nicht der Fall ist, wird eine Alarmmeldung an den Fahrer gesendet, um ihm mitzuteilen, dass die Notlauftrajektorien-Berechnung ausgefallen ist.

Im Fehlerfall liegen die von dem ersten DFP errechneten Trajektorien nicht innerhalb des sicheren Raum-Zeit Domains (SRZD), das von dem zweiten DFP errechnet wurde. Im Fehlerfall lässt es sich nicht entscheiden, ob der erste DFP oder der zweite DFP fehlerhaft ist. Im Fehlerfall ist dann vorzugsweise vorgesehen, dass von der Entscheidungsinstanz die Notlauftrajektorie ausgewählt wird, ohne zu überprüfen, ob die Notlauftrajektorie innerhalb des SRZD liegt.

Im laufenden Betrieb ist es sehr schwierig zu entscheiden, ob ein festgestellter Fehler im Resultat eines DFP auf Grund eines Alterungsfehlers in der Hardware oder eines Softwarefehlers verursacht wurde. Diese Unterscheidung ist jedoch im Augenblick des Auftretens des Fehlers unwesentlich, da die vorgeschlagene Architektur beide Fehlerarten maskiert.

### Zitierte Literatur:

[1] US Pat. Application 20160033965 Device and Method for the Autonomous Control of Vehicles, published Feb. 4, 2016
[2] PCT Anmeldung PCT/AT2015/050212. Computersystem und Verfahren für sicherheitskritische Anwendungen. Patentanmeldung der FTS Computertechnik beim Österreichischen Patentamt. 3. Sept. 2015.
[3] Österreichische Patentanmeldung A 5073/2016. Fehlertolerantes Verfahren und Vorrichtung zur Steuerung einer autonomen technischen Anlage mittels diversitärer Trajektorienplanung. Patentanmeldung der FTS Computertechnik beim Österreichischen Patentamt. 16. August 2016
[4] Wikipedia, Autonomes Fahren, abgerufen am 11.8.2016
[5] Wikipedia, Automotive Safety Integrity Levels ISO 26262, abgerufen am 11.8.2016
[6] FAA. Advisory Circular System Safety Assessment for Part 23 Airplanes. URL: http://www.faa.gov/documentLibrary/media/Advisory_Circular/AC%2023.1309-1E.pdf, abgerufen am 11.8.2016
[7] Avizienis, A. The N-Version Approach to Fault-Tolerant Software, IEEE Trans. on Software Engineering, Vol 11, pp. 1491-1501. Dez. 1985
[8] Kopetz, H. Real-Time Systems, Design Principles for Distributed Embedded Applications. Springer Verlag. 2011.

## Patentansprüche

1. Verfahren zur Steuerung eines kontrollierten Objektes, beispielsweise eines Fahrzeugs, das in einer sich verändernden Umgebung eingebettet ist, wobei ein die Steuerung durchführendes elektronisches System Sensoren (111, 121, 131), insbesondere eine Vielzahl von Sensoren, Aktuatoren, insbesondere eine Vielzahl von Aktuatoren, und Knotenrechner, insbesondere eine Vielzahl von Knotenrechnern, umfasst, welche über ein Echtzeitkommunikationssystem Daten austauschen,
**dadurch gekennzeichnet, dass**
das kontrollierte Objekt und dessen Umgebung mit Sensoren periodisch beobachtet werden, und in jedem Frame basierend auf den durch die Beobachtung des kontrollierten Objektes und dessen Umgebung erfassten Daten mindestens drei unabhängige Datenflusspfade (110, 120, 130), DFP, ausgeführt werden, wobei beispielsweise für jeden DFP die Beobachtung mittels unterschiedlicher Sensoren erfolgt, und wobei
• ein erster DFP (110) aus den durch die Beobachtung des kontrollierten Objektes und dessen Umgebung erfassten Daten mittels komplexer Software (114) ein Modell des kontrollierten Objektes und der Umgebung des kontrollierten Objektes ermittelt und auf Basis dieses Modells eine Trajektorien-Planung durchführt, um eine oder mehrere mögliche Trajektorien, die unter den gegebenen Umweltbedingungen einer vorgegeben Aufgabenstellung entsprechen, zu erstellen, und wobei
• ein zweiter DFP (120) aus den durch die Beobachtung des kontrollierten Objektes und dessen Umgebung erfassten Daten mittels, vorzugsweise diversitärer, komplexer Software (124) ein Modell des kontrollierten Objektes und der Umgebung des kontrollierten Objektes ermittelt und auf Basis dieses Modells ein *sicheres Raum-Zeit Domain,* SRZD, festlegt, innerhalb welchem SRZD alle sicheren Trajektorien liegen müssen, und wobei
• ein dritter DFP (130) aus durch die Beobachtung des kontrollierten Objektes und dessen Umgebung erfassten Daten ein Modell des kontrollierten Objektes und der Umgebung des kontrollierten Objektes ermittelt und auf Basis dieses Modells eine Notlauftrajektorie errechnet,
und wobei im Normalbetrieb eine Entscheidungsinstanz (150) überprüft, ob die Notlauftrajektorie innerhalb des sicheren Raum-Zeit Domain (SRZD) liegt.

2. Verfahren nach Anspruch 1, **dadurch gekennzeichnet, dass** Berechnungen der Entscheidungsinstanz (150) auf einer TMR Hardware ausgeführt werden.

3. Verfahren nach Anspruch 1 oder 2, **dadurch gekennzeichnet, dass** Berechnungen der Entscheidungsinstanz (150) gleichzeitig auf zwei unabhängigen self-checking Hardwarebaueinheiten ausgeführt werden.

4. Verfahren nach einem der Ansprüche 1 bis 3, **dadurch gekennzeichnet, dass** die Ergebnisse des ersten und des zweiten DFPs (110, 120) einer Entscheidungsinstanz (150) übergeben werden, wobei die Entscheidungsinstanz mittels einer *einfachen Software* realisiert ist, und wobei die Entscheidungsinstanz überprüft, ob mindestens eine der vom ersten DFP (110) ermittelten Trajektorien *sicher* ist, d.h. innerhalb des SRZD liegt, das von dem zweiten DFP (120) ermittelt wurde, und wobei im Falle, dass dies zutrifft, eine vom ersten DFP (110) ermittelte sichere Trajektorie ausgewählt wird, und wobei die Entscheidungsinstanz (150) die der ausgewählten Trajektorie entsprechenden Sollwerte an eine Aktuatorsteuerung übergibt, und wobei im Falle, dass dies nicht zutrifft, auf die Ergebnisse mindestens eines folgenden Frames gewartet wird, und wobei im Falle, dass auch im nächsten oder übernächsten Frame keine sichere Trajektorie vorhanden, ist von der Entscheidungsinstanz (150) auf eine Notlauftrajektorie umgeschaltet wird.

5. Verfahren nach einem der Ansprüche 1 bis 4, **dadurch gekennzeichnet, dass** die Entscheidungsinstanz (150) im Falle, dass die Notlauftrajektorie nicht vorhanden oder nicht sicher ist, d.h. nicht innerhalb des SRZD liegt, eine Alarmmeldung abgibt, beispielsweise eine Alarmmeldung an einen Benutzer des kontrollierten Objektes, z.B. den Fahrer eines Fahrzeuges, übermittelt.

6. Elektronisches System zur Steuerung eines kontrollierten Objektes, beispielsweise eines Fahrzeugs, das in einer sich verändernden Umgebung eingebettet ist, wobei das elektronische System Sensoren (111, 121, 131), insbesondere eine Vielzahl von Sensoren, Aktuatoren, insbesondere eine Vielzahl von Aktuatoren, und Knotenrechner, insbesondere eine Vielzahl von Knotenrechnern, umfasst, welche über ein Echtzeitkommunikationssystem Daten austauschen,
**dadurch gekennzeichnet, dass**
es das kontrollierte Objekt und dessen Umgebung mit Sensoren (111, 121, 131) periodisch beobachtet, und in jedem Frame basierend auf den durch die Beobachtung des kontrollierten Objektes und dessen Umgebung erfassten Daten mindestens drei unabhängige Datenflusspfade (110, 120, 130), DFP, ausführt, wobei beispielsweise für jeden DFP die Beobachtung mittels unterschiedlicher Sensoren erfolgt, und wobei
• ein erster DFP (110) aus den durch die Beobachtung des kontrollierten Objektes und dessen Umgebung erfassten Daten mittels komplexer Software (114) ein Modell des kontrollierten Objektes und der Umgebung des kontrollierten Objektes ermittelt und auf Basis dieses Modells eine Trajektorien-Planung durchführt, um eine oder mehrere mögliche Trajektorien, die unter den gegebenen Umweltbedingungen einer vorgegeben Aufgabenstellung entsprechen, zu erstellen, und wobei
• ein zweiter DFP (120) aus den durch die Beobachtung des kontrollierten Objektes und dessen Umgebung erfassten Daten mittels, vorzugsweise diversitärer, komplexer Software (124) ein Modell des kontrollierten Objektes und der Umgebung des kontrollierten Objektes ermittelt und auf Basis dieses Modells ein *sicheres Raum-Zeit Domain,* SRZD, festlegt, innerhalb welchem SRZD alle sicheren Trajektorien liegen müssen, und wobei
• ein dritter DFP (130)
ein Modell des kontrollierten Objektes und der Umgebung des kontrollierten Objektes aus durch die Beobachtung des kontrollierten Objektes und dessen Umgebung erfassten Daten ermittelt und auf Basis dieses Modells eine Notlauftrajektorie errechnet,
und wobei im Normalbetrieb eine Entscheidungsinstanz (150) überprüft, ob die Notlauftrajektorie innerhalb des sicheren Raum-Zeit Domain (SRZD) liegt.

7. System nach Anspruch 6, **dadurch gekennzeichnet, dass** Berechnungen der Entscheidungsinstanz (150) auf einer TMR Hardware ausgeführt werden.

8. System nach Anspruch 6 oder 7, **dadurch gekennzeichnet, dass** Berechnungen der Entscheidungsinstanz (150) gleichzeitig auf zwei unabhängigen self-checking Hardwarebaueinheiten (351, 352) ausgeführt werden.

9. System nach einem der Ansprüche 6 bis 8, **dadurch gekennzeichnet, dass** die Ergebnisse des ersten und des zweiten DFPs (110, 120) einer Entscheidungsinstanz (150) übergeben werden, wobei die Entscheidungsinstanz (150) mittels einer *einfachen Software* realisiert ist, und wobei die Entscheidungsinstanz überprüft, ob mindestens eine der vom ersten DFP (110) ermittelten Trajektorien *sicher* ist, d.h. innerhalb des SRZD liegt, das von dem zweiten DFP (120) ermittelt wurde, und wobei im Falle, dass dies zutrifft, eine vom ersten DFP ermittelte sichere Trajektorie ausgewählt wird, und wobei die Entscheidungsinstanz (150) die der ausgewählten Trajektorie entsprechenden Sollwerte an eine Aktuatorsteuerung übergibt, und wobei im Falle, dass dies nicht zutrifft, auf die Ergebnisse mindestens eines folgenden Frames gewartet wird, und wobei im Falle, dass auch im nächsten oder übernächsten Frame keine sichere Trajektorie vorhanden, ist von der Entscheidungsinstanz auf eine Notlauftrajektorie umgeschaltet wird.

10. System nach einem der Ansprüche 6 bis 9, **dadurch gekennzeichnet, dass** die Entscheidungsinstanz (150) im Falle, dass die Notlauftrajektorie nicht vorhanden oder nicht sicher ist, d.h. nicht innerhalb des SRZD liegt, eine Alarmmeldung abgibt, beispielsweise eine Alarmmeldung an einen Benutzer des kontrollierten Objektes, z.B. den Fahrer eines Fahrzeuges, übermittelt.

## Claims

1. Method for controlling a controlled object, for example a vehicle, which is embedded in a changing environment, wherein an electronic system carrying out said controlling comprises sensors (111, 121, 131), in particular a plurality of sensors, actuators, in particular a plurality of actuators, and node computers, in particular a plurality of node computers, which exchange data via a real-time communication system
**characterised in that**
the controlled object and its environment are periodically observed with sensors, and in each frame based on the data acquired by observing the controlled object and its environment at least three independent data flow paths (110, 120, 130), DFP, are executed, wherein, for example, for each DFP the observation is made by means of different sensors, and wherein
- a first DFP (110) determines a model of the controlled object and the environment thereof from the data acquired by observing the controlled object and its environment by means of complex software (114), and carries out trajectory planning based on said model in order to generate one or more possible trajectories which correspond to a predetermined task under the given environmental conditions; and wherein
- a second DFP (120) determines a model of the controlled object and the environment thereof from the data acquired by observing the controlled object and its environment by means of, preferably diverse, complex software (124), and based on said model determines a *safe space-time domain*, SRZD, within which SRZD all safe trajectories must lie;
and wherein
- a third DFP (130) determines a model of the controlled object and the environment thereof from data acquired by observing the controlled object and its environment, and based on said model calculates an emergency trajectory,
and wherein during normal operation a decision authority (150) checks whether the emergency trajectory lies within the safe space-time domain (SRZD).

2. The method according to claim 1, **characterized in that** calculations of the decision instance (150) are executed on TMR hardware.

3. The method according to claim 1 or 2, **characterized in that** calculations of the decision instance (150) are executed simultaneously on two independent self-checking hardware units.

4. The method according to one of claims 1 to 3, **characterized in that** the results of the first and the second DFPs (110, 120) are transferred to a decision instance (150), said decision instance being realized by means of a *simple software*, and wherein the decision instance checks whether at least one of the trajectories determined by the first DFP (110) is *safe*, i.e. lies within the SRZD determined by the second DFP (120), and wherein, in the case this is true, a safe trajectory determined by the first DFP (110) is selected, and wherein the decision instance (150) transfers the nominal values corresponding to the selected trajectory to an actuator controller, and wherein, in the case this is not true, the results of at least one subsequent frame are waited for, and wherein, in the event that also in the next or second-next frame no safe trajectory is present, the decision authority (150) switches to an emergency trajectory.

5. The method according to one of claims 1 to 4, **characterized in that** in the event that the emergency trajectory is not present or not safe, i.e. is not within the SRZD, the decision instance (150) issues an alarm message, for example transmits an alarm message to a user of the controlled object, e.g. the driver of a vehicle.

6. Electronic system for controlling a controlled object, for example a vehicle, which is embedded in a changing environment, wherein the electronic system comprises sensors (111, 121, 131), in particular a plurality of sensors, actuators, in particular a plurality of actuators, and node computers, in particular a plurality of node computers, which exchange data via a real-time communication system
**characterised in that**
it periodically observes the controlled object and its environment with sensors (111, 121, 131), and executes, in each frame, at least three independent data flow paths (110, 120, 130), DFP, based on the data acquired by observing the controlled object and its environment, wherein, for example, for each DFP the observation is made by means of different sensors,
and wherein
- a first DFP (110) determines a model of the controlled object and the environment thereof from the data acquired by observing the controlled object and its environment by means of complex software (114), and carries out trajectory planning based on said model in order to generate one or more possible trajectories which correspond to a predetermined task under the given environmental conditions; and wherein
- a second DFP (120) determines a model of the controlled object and the environment thereof from the data acquired by observing the controlled object and its environment by means of, preferably diverse, complex software (124), and based on said model determines a *safe space-time domain*, SRZD, within which SRZD all safe trajectories must lie;
and wherein
- a third DFP (130) determines a model of the controlled object and the environment of the controlled object from data acquired by observing the controlled object and the environment thereof and calculates an emergency trajectory based on this model,
and wherein during normal operation a decision authority (150) checks whether the emergency trajectory lies within the safe space-time domain (SRZD).

7. The system according to claim 6, **characterized in that** calculations of the decision instance (150) are executed on TMR hardware.

8. The system according to claim 6 or 7, **characterized in that** calculations of the decision instance (150) are executed simultaneously on two independent self-checking hardware devices (351, 352).

9. The system according to one of claims 6 to 8, **characterized in that** the results of the first and second DFPs (110, 120) are transferred to a decision instance (150), said decision instance (150) being realized by means of a *simple software*, and wherein the decision instance checks whether at least one of the trajectories determined by the first DFP (110) is *safe*, i.e. lies within the SRZD determined by the second DFP (120), and wherein, in the case this is true, a safe trajectory determined by the first DFP is selected, and wherein the decision instance (150) transfers the nominal values corresponding to the selected trajectory to an actuator controller, and wherein, in the case this is not true, the results of at least one subsequent frame are waited for, and wherein, in the event that also in the next or second-next frame no safe trajectory is present, the decision authority switches to an emergency trajectory.

10. The system according to one of claims 6 to 9, **characterized in that** in the event that the emergency trajectory is not present or not safe, i.e. is not within the SRZD, the decision authority (150) issues an alarm message, for example transmits an alarm message to a user of the controlled object, e.g. the driver of a vehicle.

## Revendications

1. Procédé de commande d'un objet contrôlé, par exemple un véhicule, qui est incorporé dans un environnement changeant, dans lequel un système électronique effectuant la commande comprend des capteurs (111, 121, 131), en particulier une pluralité de capteurs, des actionneurs, en particulier une pluralité d'actionneurs, et des ordinateurs de nœud, en particulier une pluralité d'ordinateurs de nœud, qui échangent des données via un système de communication en temps réel
**caractérisé en ce que**
l'objet contrôlé et son environnement sont périodiquement observés au moyen de capteurs, et au moins trois trajectoires de flux de données (110, 120, 130), TFD, indépendantes sont exécutées dans chaque trame sur la base des données acquises par l'observation de l'objet contrôlé et de son environnement, dans lequel, par exemple, pour chaque TFD l'observation est faite au moyen de différents capteurs, et dans lequel
- un premier TFD (110) détermine un modèle de l'objet contrôlé et de son environnement à partir des données acquises par l'observation de l'objet contrôlé et de son environnement au moyen d'un logiciel complexe (114) et, sur la base de ce modèle, effectue une planification de trajectoire afin de créer une ou plusieurs trajectoires possibles qui correspondent à une tâche prédéterminée dans les conditions environnementales données, et dans lequel
- un deuxième TFD (120) détermine un modèle de l'objet contrôlé et de son environnement à partir des données acquises par l'observation de l'objet contrôlé et de son environnement au moyen d'un logiciel complexe, de préférence diversifié (124), et, sur la base de ce modèle, détermine un *domaine espace-temps sûr*, DETS, à l'intérieur duquel doivent se situer toutes les trajectoires sûres, et dans lequel
- un troisième TFD (130) détermine un modèle de l'objet contrôlé et de son environnement à partir des données acquises par l'observation de l'objet contrôlé et de son environnement et calcule une trajectoire d'urgence sur la base de ce modèle,
et dans lequel, en fonctionnement normal, une autorité de décision (150) vérifie si la trajectoire d'urgence se situe dans le domaine espace-temps de sécurité (DETS).

2. Procédé selon la revendication 1, **caractérisée en ce que** les calculs de l'instance de décision (150) sont exécutés sur le matériel TMR.

3. Procédé selon la revendication 1 ou 2, **caractérisée en ce que** les calculs de l'instance de décision (150) sont exécutés simultanément sur deux unités matérielles d'autocontrôle indépendants.

4. Procédé selon l'une quelconque des revendications 1 à 3, **caractérisé en ce que** les résultats des premier et deuxième TFD (110, 120) sont transférés à une instance de décision (150), dans lequel l'instance de décision est mise en œuvre au moyen d'un logiciel simple, et dans lequel l'instance de décision vérifie si au moins une des trajectoires déterminées par le premier TFD (110) est sûre, c'est-à-dire se situe dans la DETS déterminée par le deuxième TFD (120), et dans lequel, cela étant le cas, une trajectoire de sécurité déterminée par le premier TFD (110) est sélectionnée, et dans lequel l'instance de décision (150) transfère les points de consigne correspondant à la trajectoire sélectionnée à un contrôleur d'actionneur, et dans lequel, cela n'étant pas le cas, on attend les résultats d'au moins une trame suivante, et dans lequel, dans le cas où aucune trajectoire sûre n'est également présente dans la trame suivante ou la prochaine, l'autorité de décision (150) passe à une trajectoire d'urgence.

5. Procédé selon l'une quelconque des revendications 1 à 4, **caractérisée en ce que** dans le cas où la trajectoire d'urgence n'est pas présente ou n'est pas sûre, c'est-à-dire qu'elle ne se situe pas dans le DETS, l'instance de décision (150) émet un message d'alarme, par exemple transmet un message d'alarme à un utilisateur de l'objet contrôlé, par exemple le conducteur d'un véhicule.

6. Système électronique pour commander un objet contrôlé, par exemple un véhicule, qui est incorporé dans un environnement changeant, dans lequel le système électronique comprend des capteurs (111, 121, 131), en particulier une pluralité de capteurs, des actionneurs, en particulier une pluralité d'actionneurs, et des ordinateurs de nœud, en particulier une pluralité d'ordinateurs de nœud, qui échangent des données via un système de communication en temps réel
**caractérisé en ce que**
il observe périodiquement l'objet contrôlé et son environnement au moyen de capteurs (111, 121, 131), et dans chaque trame, il exécute au moins trois trajets de flux de données (110, 120, 130), TFD, indépendants sur la base des données acquises par l'observation de l'objet contrôlé et de son environnement, dans lequel, par exemple, pour chaque TFD, l'observation est faite au moyen de différents capteurs, et dans lequel
- un premier TFD (110) détermine un modèle de l'objet contrôlé et de son environnement de à partir des données acquises par l'observation de l'objet contrôlé et de son environnement au moyen d'un logiciel complexe (114) et, sur la base de ce modèle, effectue une planification de trajectoire afin de créer une ou plusieurs trajectoires possibles qui correspondent à une tâche prédéterminée dans les conditions environnementales données, et dans lequel
- un deuxième TFD (120) détermine un modèle de l'objet contrôlé et de son environnement à partir des données acquises par l'observation de l'objet contrôlé et de son environnement au moyen d'un logiciel complexe, de préférence diversifié (124), et, sur la base de ce modèle, détermine un *domaine espace-temps sûr*, DETS, à l'intérieur duquel doivent se situer toutes les trajectoires sûres, et dans lequel
- un troisième TFD (130) détermine un modèle de l'objet contrôlé et de l'environnement de l'objet contrôlé à partir des données acquises par l'observation de l'objet contrôlé et de son environnement et calcule une trajectoire d'urgence sur la base de ce modèle,
et dans lequel, en fonctionnement normal, une autorité de décision (150) vérifie si la trajectoire d'urgence se situe dans le domaine espace-temps de sécurité (DETS).

7. Système selon la revendication 6, **caractérisé en ce que** les calculs de l'instance de décision (150) sont exécutés sur le matériel TMR.

8. Système selon la revendication 6 ou 7, **caractérisé en ce que** les calculs de l'instance de décision (150) sont exécutés simultanément sur deux unités matérielles d'autocontrôle indépendants (351, 352).

9. Système selon l'une quelconque des revendications 6 à 8, **caractérisé en ce que** les résultats des premier et deuxième TFD (110, 120) sont transférés à une instance de décision (150), dans lequel l'instance de décision (150) est mise en œuvre au moyen d'un logiciel simple, et dans lequel l'instance de décision vérifie si au moins une des trajectoires déterminées par le premier TFD (110) est sûre, c'est-à-dire se situe dans la DETS déterminée par le deuxième TFD (120), et dans lequel, cela étant le cas, une trajectoire de sécurité déterminée par le premier TFD est sélectionnée, et dans lequel l'instance de décision (150) transfère les points de consigne correspondant à la trajectoire sélectionnée à un contrôleur d'actionneur, et dans lequel, cela n'étant pas le cas, on attend les résultats d'au moins une trame suivante, et dans lequel, dans le cas où aucune trajectoire sûre n'est également présente dans la trame suivante ou la prochaine, l'autorité de décision passe à une trajectoire d'urgence.

10. Système selon l'une quelconque des revendications 6 à 9, **caractérisé en ce que** dans le cas où la trajectoire d'urgence n'est pas présente ou n'est pas sûre, c'est-à-dire qu'elle ne se trouve pas dans le DETS, l'autorité de décision (150) émet un message d'alarme, par exemple transmet un message d'alarme à un utilisateur de l'objet contrôlé, par exemple le conducteur d'un véhicule.
